# EUROPÄISCHE PATENTSCHRIFT

(11) **EP 2 362 428 B1**
(45) Veröffentlichungstag und Bekanntmachung des Hinweises auf die Patenterteilung: **29.11.2017**
(21) Anmeldenummer: 11155085.1
(22) Anmeldetag: 18.02.2011
(51) Int. Cl.: H01L 31/042, F24J 2/52

(54) **Verfahren und Anordnung zur Befestigung von Profilschienen für Photovoltaik- und/oder Solarpanele auf Flachdächern**
Method and assembly for fastening section bars for photovoltaic and/or solar panels on flat roofs
Procédé et agencement de fixation de rails de profilés pour panneaux photovoltaïques et/ou solaires sur des toits plats

(30) Priorität: 19.02.2010 DE 202010000227 U
(43) Veröffentlichungstag der Anmeldung: 31.08.2011
(73) Patentinhaber: Brüggemann, Folkert, 21781 Cadenberge (DE)
(72) Erfinder: Brüggemann, Folkert, 21781 Cadenberge (DE)
(74) Vertreter: Hansen, Jochen

(56) Entgegenhaltungen:
- DE-A1-102006 022 455
- DE-U1-202008 000 237
- US-A1- 2003 094 193

## Beschreibung

Die Erfindung betrifft ein Verfahren und Anordnung zur Befestigung von Profilschienen und Gestellen für Photovoltaik - und/oder Solarpanele auf Flachdächern. Flachdach bedeutet dabei ein Dach, dass keine oder nur eine geringe Dachneigung aufweist, wobei geringe Dachneigung eine Dachneigung bis zu 10 Grad zur Horizontalen bedeutet.

Die Montage von Photovoltaik- oder Solaranlagen auf Flachdächern erfordert zur optimalen Ausrichtung auf die einstrahlende Sonnenenergie eine geneigte Aufstellung. Entsprechend sind die flächigen Module an einer Aufständerung geneigt befestigt. Die Aufständerung erfolgt auf Profilschienen, die in geeigneter Weise auf dem Flachdach festzusetzen sind. Dabei ist eine Flachdachmontage, insbesondere bei Folien- und Bitumendächern schwierig, da jede Dachdurchdringung eine Schwächung der Dachhaut und damit die Gefahr von Gebäudeundichtigkeiten nach sich zieht. Meist wird daher eine Aufständerung und Festlegung der Profilschienen auf dem Flachdach mittels Auflast bevorzugt. Diese Art der Festlegung der aufgeständerten Photovoltaik-/Solaranlage vermeidet jegliche Dachdurchdringung zur Befestigung. Nachteilig ist jedoch, dass das hohe Gewicht der zusätzlichen Auflast, die Statik der Dachkonstruktion häufig überfordert. Bei derartigen Einbausituationen wurde bisher entweder die Auflast gemindert durch Kopplung mehrerer nebeneinander liegender Modulreihen und/oder durch mechanische Befestigung in der Dachkonstruktion. Bei einer mechanischen Befestigung wird jedoch die Dachhaut durchdrungen, was insbesondere im Laufe der Zeit durch insbesondere thermisch induzierte Ausdehnungen und Kontraktionen zu einer Befestigungslochaufweitung und schließlich zu Undichtigkeiten der Dachhaut führt.

Ferner ist aus der US 6,617,502 B2 eine Photovoltaikanordnung für Flachdächer bekannt, bei der die zur Befestigung der Photovoltaikmodule vorgesehenen Profilschienen mit ihrem Aufstellfuß auf die vorhandene Flachdachdeckung aufgeklebt werden. Dabei wird insbesondere eine Warmverklebung, also Verschweißung mit der Dachhaut beschrieben. Nachteilig ist jedoch, dass bei den in der US 6,617,507 B2 beschriebenen Klebemethoden nur eine geringe Haftwirkung in Abhängigkeit der Oberfläche des Untergrundes bewirkt wird. Insbesondere bei einer Besplittung oder aber auch bei Talkumierung einer unbehandelten Bitumenschicht dürfte kaum eine ausreichende Haftung für die aufzunehmenden Kräfte, insbesondere Windsogkräfte erreichbar sein.

Ferner ist aus der DE 20 2008 000 237 U1 eine Befestigungseinrichtung zum Befestigen von beispielsweise Photovoltaikelementen auf einer Dachfläche bekannt, bei der ebenfalls eine Klebebefestigung auf der Dachoberfläche ohne Durchdringung der äußeren Dachhaut beschrieben ist. Dabei wird auf einer frei zugänglichen Oberseite des Halteelementes ein flexibler Streifen aus einem thermoplastischen Material, insbesondere aus PVC oder flexiblem Polyolefin, der auch faserverstärkt ausgebildet sein kann, das Halteelement überdeckend auf die Dachhaut aufgeschweißt. Nachteilig ist bei der Überklebung des Halteelementes mit dem flexiblen Streifen aus einem Thermoplasten die Haltekraft mindernde Brücken mit nicht benetzten Hohlräumen entstehen, so dass sich die Halteelemente bei wechselnder Beanspruchung lösen können. Bei starker Hitzebeanspruchung kann ebenfalls eine Schwächung auftreten.

Aufgabe der Erfindung ist es daher, ausgehend von der US 6,617,507 B2 ein Verfahren bzw. eine Anordnung zur Befestigung von Photovoltaikpanelen auf Flachdächern anzugeben, bei der durch die Verklebung eine hohe Haftkraft und gleichzeitig eine Lastverteilung erreicht wird.

Gelöst wird diese Aufgabe mit dem in Anspruch 1 angegebenen Verfahren und mit der in Anspruch 4 wiedergegebenen Anordnung.

Durch das Aufkleben der Profilschiene direkt auf der Dachhaut des Flachdaches vermittelt über ein dazwischen gelegtes faserverstärktes Laminat wird eine flächige Wirkverbindung der Klebung auf der Dachhaut des Flachdaches und somit der Dachunterkonstruktion gewährleistet. Es kann somit auf eine Durchdringung der Dachhaut verzichtet werden, ohne dabei die Nachteile von zusätzlichen Balastgewichten, nämlich die erhebliche Belastung der Dachunterkonstruktion in Kauf nehmen zu müssen. Statt bei einer Konstruktion mit Auflastgewichten die Modulreihen bei nicht ausreichender Tragkraft weiter voneinander zu entfernen und somit Nutzfläche zu verschenken, können die Modulreihen erfindungsgemäß in einer entsprechend der Lichteinstrahlung sinnvollen geometrischen Anordnung optimal auf der Flachdachfläche verteilt werden. Es kann somit ein erheblich höherer Solarertrag durch optimale enge Aufstellung der Module erreicht werden.

Mittels bekannter Klebetechniken wird durch das auf dem Dach flach aufgelegte Laminat, bestehend aus einer Faserverstärkung und einem Kunstharz als Matrix, eine kalthärtende auf der Oberfläche der Dachhaut vollständig, nämlich ohne Hohlräume aufliegende Verbindung, die mechanisch spannungsfrei ist und somit keine Rückstellmomente erzeugt, bereitgestellt. Das dann in den flüssigen Kunstharz eingeklebte Profil zeigt somit eine hohe Haftung, die lastverteilend auf die bestehende Dachhaut und damit das Flachdach übertragen wird. Um eine gleichmäßige Kraftverteilung auf einen Flächenstreifen zu erreichen, besteht die Faserverstärkung aus einem Fasergewebe oder-vlies. Besonders bevorzugt ist ein Polyestergittervlies, beispielsweise unter dem Markennamen "Widopan Polyestergittervlies G 165 oder G 225".

Wenn die Profilschiene oder der Profilschienenabschnitt in der zum Flachdach zeigenden Auflagefläche eine Vielzahl von Öffnungen aufweist, wobei der Kunstharz die Öffnungen ausfüllt und oben in einer pilzartigen Struktur übersteht, wird eine zusätzliche formschlüssige "Verkrallung" der Profilschiene bzw. - abschnitt auf und in dem Kunstharz des Laminatstreifens erreicht. Bei der Erstellung wird dafür in eine gelochte Profilschiene oder einen gelochten Profilschienenabschnitt nach dem Auflegen auf den Laminatstreifen Kunstharz gegossen. Damit wird eine innige Verbindung zwischen Laminatstreifen und Profilschiene erreicht. Neben der adhäsiven Wirkung tritt flankierend eine kraftschlüssige Verbindung.

Zum Ausgleich von Unebenheiten des Flachdaches wird durch Zwischenfügen eines Dickschichtspachtels die Profilschiene oder der Profilschienenabschnitt mit beabstandet angeordneten weiteren Profilschienen oder Profilschienenabschnitten ausgerichtet. Die Ausrichtung oder Nivellierung wird bevorzugt mit den auf den Profilschienenabschnitten zu montierende Montageschienen für die Solarpanele durchgeführt. Selbstverständlich können auch entsprechende Vermessungen durchgeführt werden. Zur Erhöhung der Lastaufnahmefähigkeit der pilzartigen Struktur und der gewünschten Verkrallung in den Öffnungen der Profilschiene bzw. dem Profilschienenabschnitt sind dem Kunstharz Kurzfasern, bevorzugt aus PA- oder PP-Fasern, beigemischt

Dadurch, dass zum Ausgleich von Unebenheiten des Flachdaches eine Schicht eines Dickschichtspachtels zwischen dem Laminatstreifen und der Profilschiene oder dem Profilschienenabschnitt angeordnet ist, wobei die Schichtdicke so gewählt ist, dass die Profilschiene oder der Profilschienenabschnitt mit weiteren beabstandeten Profilschienen oder Profilschienenabschnitten auf eine Montageebene ausgerichtet ist, wird eine hohl liegende Profilschiene oder eine unerwünschte Verspannung in der Aufdachmontage verhindert. Wenn die Faserverstärkung aus einem Fasergewebe oder -vlies, bevorzugt aus einem PA-oder PP-Gittervlies besteht, wird im Zusammenhang mit dem die Faserverstärkung umschließenden Kunstharz eine Lastverteilungsschicht unmittelbar auf der Dachhaut gebildet. Je nach Anforderungen kann das Fasergewebe oder -vlies auch mehrlagig, bevorzugt mit zu den Rändern hin abnehmender Stärke, verwendet werden. Polyamid- oder Polypropylengittervliese haben sich als besonders geeignet in Verbindung mit Dachkonstruktionen dargestellt, da auch aus der Kunstharzmatrix etwaig herausstehende Fasern nicht in unerwünschter Weise Wasser in das Laminat ziehen.

Dadurch, dass die Profilschiene oder der Profilschienenabschnitt vom Flachdach aufstehende Flanken aufweist, die mit auf dem Flachdach verklebtem Laminat beklebt sind, kann eine zusätzliche mechanische Verbindung zu den aufstehenden Außenflanken bei der Verklebung auf dem Dach erreicht werden, womit die erforderliche Ausreisskraft für die Profilschiene auf dem Flachdach weiter erhöht wird.

Besonders bevorzugt ist die Profilschiene oder der Profilschienenabschnitt ein U-, Trapez- oder Omega-Profil aus Lochblech, bevorzugt aus verzinktem Blech, rostfreiem Stahlblech oder Aluminiumblech. Solche Profile lassen sich aus Lochblechmaterial, beispielsweise durch Gleitziehbiegen, herstellen. Ebenso können industriell gefertigte Profile aus Lochblechen verwendet werden. Wichtig ist, dass die als Lagerfläche auf der Dachhaut dienende Auflagefläche eine Vielzahl von Öffnungen, hier die Öffnungen des Lochblechs, aufweisen, so dass eine starke Durchdringung und somit Verkrallung mittels pilzartiger Strukturen an den Öffnungen eine erhöhte Haftung auf dem Untergrund ergeben. Bei Verwendung eines mit Kurzfasern gemischten Kunstharzes werden die zur Ablösung einer solchermaßen auf einer Dachhaut aufgeklebten Profilschiene erforderlichen Ablösekräfte nochmals deutlich erhöht.

Nachfolgend werden zwei Ausführungsbeispiele der Erfindung anhand der beiliegenden Figuren detailliert dargestellt.

Darin zeigt:
- Fig. 1: in einem Querschnitt eine Befestigungsanordnung nach einem ersten Ausführungsbeispiels und
- Fig. 2: in einem Querschnitt eine Befestigungsanordnung in einem zweiten Ausführungsbeispiel.

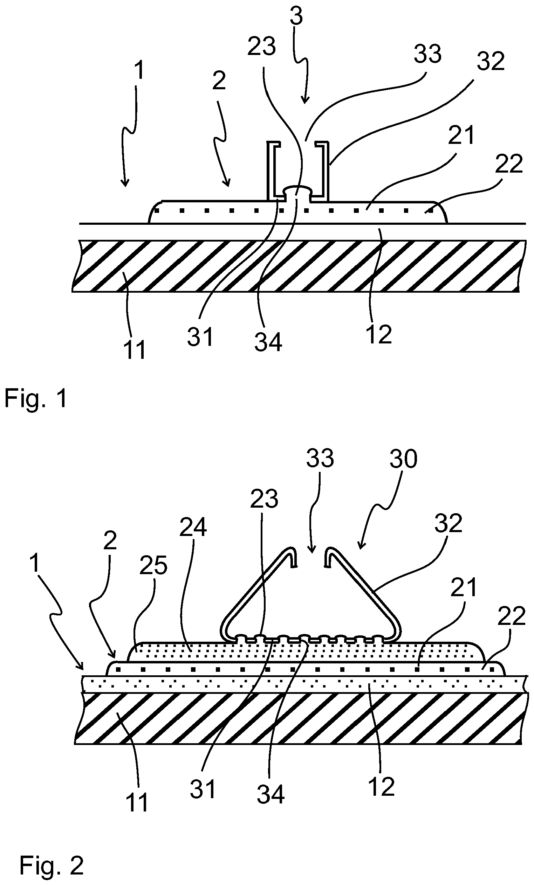

In Fig. 1 ist ein Flachdach 1 im Querschnitt dargestellt. Das Flachdach 1 weist eine Unterkonstruktion 11 sowie eine auf der Unterkonstruktion 11 aufliegende, die Abdichtung gegen Witterungseinflüsse bildende Dachhaut 12 auf. Die Dachhaut 12 ist beispielsweise eine Folien- oder Bitumenabdichtung (Schweißbahn).

Flachdach bedeutet dabei ein Dach, dass keine oder nur eine geringe Dachneigung aufweist, wobei geringe Dachneigung eine Dachneigung bis zu 10 Grad zur Horizontalen bedeutet. Auf die Dachhaut 12 ist außenseitig ein Laminatstreifen 2, bestehend aus einer Faserverstärkung 21 mit einem die Faserverstärkung einbettenden Kunstharz 22 aufgelegt. Als Faserverstärkung 21 können Einzelfasern, Filamente, Fasergewebe oder Faservliese verwendet werden. Bevorzugt ist die Verwendung eines Polyestergittervlieses, beispielsweise unter der Produktbezeichnung Widopan-Polyestergittervlies G 165 oder G 225. Der Kunstharz 22 ist ein kalt-abbindender Flüssigkunststoff, beispielsweise dauerelastisch vernetzende Kunstharze (Reaktionsharze), wie die Produkte WIDOPAN-FD, WIDOPAN-Plus, WIDOPAN-PD, WIDOPUR-LF2K, WIDOCRYL-PM, WIDOCRYL-point und WIDOCRYL-Detail. Eine Prüfung der Haftzugfestigkeit von mit WIDOCRYL-PM verklebten Profilschienen für Photovoltaikanlagen auf einer Bitumenschweißbahn mit WIDOPAN-Polyestergittervlies (G 225) hat ergeben, dass bei einer Laminatstreifenbreite von 10 cm und einer Profilschienenlänge von 150 mm eine Höchstzugkraft je nach Profilart und Verklebungsart von 1985 bis 2296 N/150 mm über die Verklebung aufgenommen wird. Um eine übermäßige punktuelle Belastung der Dachhaut zu vermeiden, sollte der Laminatstreifen eine Breite von 6 cm bis 30 cm, insbesondere 10 cm bis 20 cm und eine Länge aufweisen, die der Länge der zu befestigenden Profilschiene bzw. Profil-Schienenabschnittes entspricht zuzüglich 10 cm bis 30 cm.

Auf diesem Laminat 2 ist eine Profilschiene 3 in den noch nicht abgebundenen Zustand des Kunstharzes 22 aufgelegt/aufgepresst. Die Profilschiene weist auf ihrer dem Flachdach 1 zugewandten Auflagefläche 31 Öffnungen 34, beispielsweise Bohrungen oder Längsschlitze, auf. Beim Anpressen der Profilschiene 3 auf den noch nicht abgebundenen Laminatstreifen 2 dringt Kunstharz 22 durch die Öffnungen 34 und erzeugt somit eine pilzartige Struktur 23, die nach Abbinden des Kunstharzes 22 eine zusätzliche formschlüssige Verbindung zwischen Profilschiene 3 und Laminatstreifen 2 bildet. Die als U-Profil ausgebildete Profilschiene 3 besitzt auf ihrer Oberseite einen Befestigungsschlitz 33, in den die Bauteile zur Befestigung und Aufständerung von Photovoltaikpanelen bzw. Solarpanelen eingesetzt und befestigt werden können. Dabei erlauben die Profilschienen 3 einen individuellen, nämlich flexiblen Aufbau.

In Fig. 2 ist in einem zweiten Ausführungsbeispiel eine Befestigungsanordnung in einem Querschnitt dargestellt. Gleiche oder funktionsgleiche Bauteile sind mit den gleichen Bezugszeichen wie in Fig. 1 dargestellt.

Auf dem Flachdach 1 mit Unterkonstruktion 11 und Dachhaut 12 ist auf der Dachhaut 12 wiederum ein Laminatstreifen 2 in der im Querschnitt in Fig. 2 dargestellten Breite und einer ausreichenden Länge für den darauf zu befestigenden Profilabschnitt 30 vorgesehen. Der Laminatstreifen 2 enthält eine Faserverstärkung 21 aus einem Polyestergittervlies, die in einer Matrix aus Kunstharz 22 eingebettet ist. Zum Höhenausgleich ist darüber ein Dickschichtspachtel 25 aufgebracht, der aus einem Kunstharz ähnlich oder identisch dem Kunstharz 22 des Laminatstreifens 2 ist. Dem Kunstharz sind Stellmittel und Quarzsand beigemischt, um eine entsprechende Lastaufnahmefähigkeit darstellen zu können. Ferner sind in dem Dickschichtspachtel 25 Kurzfasern 24 beigemischt.

Auf diesen Aufbau wird dann der Profilschienenabschnitt 30 aufgelegt, hier gebildet aus einem Lochblech, das trapezförmig abgekantet ist. Dabei bildet die untere Flanke des Trapezprofils eine Auflagefläche 31, beiderseits seitlich an die Auflagefläche 31 schließen sich nach obenhin nach innen geneigte Flanken 32, die zur Versteifung an ihren freien Enden nochmals nach innen gebogen sind und einen Befestigungsschlitz 33 frei zu lassen. In den Befestigungsschlitz 33 können die erforderlichen Anbauteile zum Ausrichten und Aufstellen der Photovoltaik- oder Solarmodule angeschraubt werden.

Bei Verwendung von kurzen Profilschienenabschnitten, beispielsweise 30 bis 50 cm Länge, können die Befestigungspunkte auf dem Dach so ausgewählt werden, dass ein optimaler Lasteintrag in die Dachunterkonstruktion gewährleistet ist und die Entwässerung der Dachfläche nicht gestört ist. Darauf kann dann die gewünschte Haltekonstruktion, beispielsweise geeignete Profilschienen, Gestelle oder sonstige Sonderkonstruktionen für die Photovoltaik-/Solarelemente in geometrisch optimaler Himmelsausrichtung unabhängig von konstruktiven Vorgaben des Daches ausgerichtet werden.

Beim Auflegen des Profilschienenabschnitts 30 mit seiner Auflagefläche 31 und den darin entsprechend dem Lochblech in einer Vielzahl vorgesehenen Öffnungen 34 wird noch flüssiger Kunstharz mit seinen beigemischten Bestandteilen, insbesondere den Kurzfasern 24 in die Öffnungen 34 laufen. Dabei wird dieser Effekt durch leichtes Andrücken des Profilschienenabschnittes 30 noch erhöht. Ergänzend und unterstützend kann von oben, beispielsweise durch den Befestigungsschlitz 33 eine kleinere Menge Kunstharz 22, bevorzugt mit Kunstfasern 24 vermischt, aufgegeben werden. In den Öffnungen 34 der Auflagefläche 31 des Profilschienenabschnitts 30 bilden sich somit pilzartige Strukturen 23 oder vollständige Umschließungen, die zu einer formschlüssige Verbindung mit der Unterkonstruktion führen.

### Bezugszeichenliste

- 1: Flachdach
- 11: Unterkonstruktion
- 12: Dachhaut

- 2: Laminatstreifen
- 21: Faserverstärkung
- 22: Kunstharz
- 23: Pilzartige Struktur
- 24: Kurzfaser
- 25: Dickschichtspachtel

- 3: Profilschiene
- 30: Profilschienenabschnitt
- 31: Auflagefläche
- 32: Flanke
- 33: Befestigungsschlitz
- 34: Öffnung

## Patentansprüche

1. Verfahren zur Befestigung von Profilschienen (3) oder Profilschienenabschnitten (30) für die Montage von Photovoltaik-und/oder Solarpanelen auf einer Dachhaut (12) eines Flachdaches (1) mit den Schritten:
- Auflegen von Kunstharz (22) getränkten Laminatstreifen (2) in vorbestimmten Abständen auf der Dachhaut (12),
- Auflegen der zu befestigenden Profilschiene (3) oder Profilschienenabschnitt (30) auf den getränkten Laminatstreifen (2) und
- Eindrücken der zu befestigenden Profilschiene (3) oder des Profilschienenabschnittes (30) in den noch nicht abgebundenen Kunstharz (22),
so dass die Profilschiene (3) oder der Profilschienenabschnitt (30) durch den dann abgebundenen Kunstharz (22) fest mit der Dachhaut (12) des Flachdaches (1) verklebt ist.

2. Verfahren nach Anspruch 1, **dadurch gekennzeichnet, dass** in eine gelochte Profilschiene (3) oder einen gelochten Profilschienenabschnitt (30) nach dem Auflegen auf den Laminatstreifen (2) Kunstharz (22) gegossen wird.

3. Verfahren nach Anspruch 1 oder 2, **dadurch gekennzeichnet, dass** zum Ausgleich von Unebenheiten des Flachdaches (1) durch Zwischenfügen eines Dickschichtspachtels (25) die Profilschiene (3) oder der Profilschienenabschnitt (30) mit beabstandet angeordneten weiteren Profilschienen oder Profilschienenabschnitten ausgerichtet wird.

4. Anordnung zur Befestigung von Profilschienen (3) oder Profilschienenabschnitten (30) für Photovoltaik - und/oder Solarpanele auf einer Dachhaut (12) eines Flachdaches (1), wobei die Profilschiene (3) oder Profilschienenabschnitt (30) auf dem Flachdach (1) aufgeklebt ist, **dadurch gekennzeichnet, dass** zum Verkleben ein Laminatstreifen (2) aus Faserverstärkung (21) und Kunstharz (22) auf dem Flachdach angeordnet ist, wobei auf dem Laminatstreifen (2) die Profilschiene (3) oder der Profilschienenabschnitt (30) aufliegt.

5. Anordnung nach Anspruch 4, **dadurch gekennzeichnet, dass** die Profilschiene (3) oder der Profilschienenabschnitt (30) in der zum Flachdach zeigenden Auflagefläche eine Vielzahl von Öffnungen (34) aufweist, wobei der Kunstharz (22) die Öffnungen (34) ausfüllt und oben in einer pilzartigen Struktur (23) übersteht.

6. Anordnung nach Anspruch 5, **dadurch gekennzeichnet, dass** dem Kunstharz (22) Kurzfasern (24), bevorzugt aus PA- oder PP-Fasern, beigemischt sind.

7. Anordnung nach Anspruch 4, 5 oder 6, **dadurch gekennzeichnet, dass** zum Ausgleich von Unebenheiten des Flachdaches (1) eine Schicht eines Dickschichtspachtels (25) zwischen dem Laminatstreifen (2) und der Profilschiene (3) oder dem Profilschienenabschnitt (30) angeordnet ist, wobei die Schichtdicke so gewählt ist, dass die Profilschiene (3) oder der Profilschienenabschnitt (30) mit weiteren beabstandeten Profilschienen oder Profilschienenabschnitten auf eine Montageebene ausgerichtet ist.

8. Anordnung nach einem der Ansprüche 4 bis 7, **dadurch gekennzeichnet, dass** die Faserverstärkung (21) aus einem Fasergewebe oder-vlies, bevorzugt aus einem PA- oder PP-Gittervlies besteht.

9. Anordnung nach einem der Ansprüche 4 bis 8, **dadurch gekennzeichnet, dass** die Profilschiene (3) oder der Profilschienenabschnitt (30) vom Flachdach (1) aufstehende Flanken (32) aufweist, die mit auf dem Flachdach (1) verklebtem Laminat (2) beklebt sind.

10. Anordnung nach einem der Ansprüche 4 bis 9, **dadurch gekennzeichnet, dass** die Profilschiene (3) oder der Profilschienenabschnitt (30) ein U-, Trapez- oder Omega-Profil aus Lochblech, bevorzugt aus verzinktem Blech, rostfreiem Stahlblech oder Aluminiumblech, ist.

## Claims

1. Method for fastening profile rails (3) or profile rail sections (30) for the mounting of photovoltaic and/or solar panels on a roof covering (12) of a flat roof (1) having the steps:
- laying synthetic resin (22) impregnated laminate strips (2) at predetermined distances on the roof covering (12),
- laying the profile rail (3) or profile rail section (30) to be fastened, on the impregnated laminate strips (2) and
- pressing the profile rail (3) or the profile rail section (30) to be fastened, into the not yet cured synthetic resin (22),
so that the profile rail (3) or the profile rail section (30) is firmly bonded to the roof covering (12) of the flat roof (1) by the then cured synthetic resin (22).

2. Method according to claim 1, **characterised in that** synthetic resin (22) is poured into a perforated profile rail (3) or a perforated profile rail section (30) after the laying on the laminate strips (2).

3. Method according to claim 1 or 2, **characterised in that** to compensate for unevenness of the flat roof (1) by interposing a thick layer filler (25), the profile rail (3) or the profile rail section (30) is aligned with spaced-apart further profile rails or profile rail sections.

4. Arrangement for fastening profile rails (3) or profile rail sections (30) for photovoltaic and/or solar panels on a roof covering (12) of a flat roof (1), wherein the profile rail (3) or profile rail section (30) is bonded on the flat roof (1), **characterised in that** for the bonding a laminate strip (2) made of fibre reinforcement (21) and synthetic resin (22) is arranged on the flat roof, wherein the profile rail (3) or the profile rail section (30) lies on the laminate strip (2).

5. Arrangement according to claim 4, **characterised in that** the profile rail (3) or the profile rail section (30) has a large number of openings (34) in the support surface facing the flat roof, wherein the synthetic resin (22) fills the openings (34) and protrudes upwards in a mushroom-like structure (23).

6. Arrangement according to claim 5, **characterised in that** short fibres (24), preferably made of PA or PP fibres, are admixed with the synthetic resin (22).

7. Arrangement according to claim 4, 5 or 6, **characterised in that** to compensate for unevenness of the flat roof (1) a layer of a thick layer filler (25) is arranged between the laminate strip (2) and the profile rail (3) or the profile rail section (30), wherein the layer thickness is selected such that the profile rail (3) or the profile rail section (30) is aligned with further spaced-apart profile rails or profile rail sections on a mounting plane.

8. Arrangement according to one of claims 4 to 7, **characterised in that** the fibre reinforcement (21) consists of a fibre fabric or fleece, preferably of a PA or PP grid fleece.

9. Arrangement according to one of claims 4 to 8, **characterised in that** the profile rail (3) or the profile rail section (30) has flanks (32) upstanding from the flat roof (1) which are bonded to laminate (2) bonded on the flat roof (1).

10. Arrangement according to one of claims 4 to 9, **characterised in that** the profile rail (3) or the profile rail section (30) is a U, trapezium or omega profile made of perforated sheet metal, preferably of galvanised sheet metal, stainless steel sheet metal or aluminium sheet metal.

## Revendications

1. Procédé de fixation de rails profilés (3) ou de sections de rails profilés (30) pour le montage de panneaux photovoltaïques ou de panneaux solaires sur une couverture de toit (12) d'un toit plat (1), avec les étapes consistant en :
- l'application de bandes de laminé (2) imprégnées de résine synthétique (22) sur la couverture de toit (12) à des distances prédéterminées,
- l'application du rail profilé (3) ou de la section de rail profilé (30) à fixer sur les bandes de laminé (2) imprégnées, et
- l'enfoncement du rail profilé (3) ou de la section de rail profilé (30) à fixer dans la résine synthétique qui n'a pas encore pris,
de telle sorte que le rail profilé ou la section de rail profilé (30) est collé fixement à la couverture de toit (12) du toit plat (1) par la résine synthétique après qu'elle a pris.

2. Procédé selon la revendication 1, **caractérisé en ce que** de la résine synthétique (22) est versée dans un rail profilé (3) percé ou une section de rail profilé (30) percée après application sur les bandes de laminé (2).

3. Procédé selon la revendication 1 ou 2, **caractérisé en ce que** le rail profilé (3) ou la section de rail profilé (30) est aligné avec d'autres rails profilés ou sections de rails profilés placés à distance en interposant du mastic en couche épaisse (25) pour compenser des inégalités de surface du toit plat (1).

4. Assemblage pour fixer des rails profilés (3) ou des sections de rails profilés (30) pour des panneaux photovoltaïques et/ou des panneaux solaires sur une couverture de toit (12) d'un toit plat (1), le rail profilé (3) ou la section de rail profilé (30) étant collée sur le toit plat (1), **caractérisé en ce que** pour le collage, une bande de laminé (2) constituée d'un renfort à base de fibres (21) et d'une résine synthétique (22) est disposée sur le toit plat, le rail profilé (3) ou la section de rail profilé (30) reposant sur la bande de laminé (2).

5. Assemblage selon la revendication 4, **caractérisé en ce que** le rail profilé (3) ou la section de rail profilé (30) présente une pluralité d'ouvertures (34) dans la surface d'appui dirigée vers le toit plat, la résine synthétique (22) remplissant les ouvertures (34) et dépassant en haut dans une structure en forme de champignon (23).

6. Assemblage selon la revendication 5, **caractérisé en ce que** des fibres synthétiques (24) sont mélangées à la résine synthétique (22), de préférence des fibres en PA ou en PP.

7. Assemblage selon la revendication 4, 5 ou 6, **caractérisé en ce que** pour compenser des inégalités de surface du toit plat (1), une couche d'un mastic en couche épaisse (25) est disposée entre la bande de laminé (2) et le rail profilé (3) ou la section de rail profilé (30), l'épaisseur de couche étant choisie de telle sorte que le rail profilé (3) ou la section de rail profilé (30) est aligné sur un plan de montage avec d'autres rails profilés ou sections de rails profilés placés à distance.

8. Assemblage selon l'une des revendications 4 à 7, **caractérisé en ce que** le renfort à base de fibres (21) est constitué par un tissu en fibres ou un non-tissé en fibres, de préférence un non-tissé grillagé en PA ou en PP.

9. Assemblage selon l'une des revendications 4 à 8, **caractérisé en ce que** le rail profilé (3) ou la section de rail profilé (30) présente des flancs (32) redressés par rapport au toit plat (1) et qui sont collés avec du laminé (2) collé sur le toit plat (1).

10. Assemblage selon l'une des revendications 4 à 9, **caractérisé en ce que** le rail profilé (3) ou la section de rail profilé (30) est un profilé en U, en trapèze ou en oméga réalisé dans une tôle trouée, de préférence dans une tôle zinguée, une tôle d'acier inoxydable ou une tôle d'aluminium.
